# EUROPÄISCHE PATENTSCHRIFT

(11) **EP 3 548 349 B1**
(45) Veröffentlichungstag und Bekanntmachung des Hinweises auf die Patenterteilung: **13.01.2021**
(21) Anmeldenummer: 17780387.1
(22) Anmeldetag: 05.10.2017
(51) Int. Cl.: B60T 13/74

(54) **ELEKTROHYDRAULISCHER FREMDKRAFT-DRUCKERZEUGER**
ELECTROHYDRAULIC EXTERNAL-FORCE PRESSURE GENERATOR
GÉNÉRATEUR DE PRESSION À FORCE EXTÉRIEURE ÉLECTRO-HYDRAULIQUE

(30) Priorität: 30.11.2016 DE 102016223736
(43) Veröffentlichungstag der Anmeldung: 09.10.2019
(73) Patentinhaber: Robert Bosch GmbH, 70442 Stuttgart (DE)
(72) Erfinder: MICKE, Marc, 74357 Boennigheim (DE)
(86) Internationale Anmeldenummer: PCT/EP2017/075316
(87) Internationale Veröffentlichungsnummer: WO 2018/099636

(56) Entgegenhaltungen:
- EP-A1- 0 729 871
- WO-A1-2013/023953
- WO-A2-2014/001138
- KR-A- 20070 062 741

## Beschreibung

Die Erfindung betrifft einen elektrohydraulischen Fremdkraft-Druckerzeuger für eine hydraulische Fahrzeugbremsanlage mit den Merkmalen des Oberbegriffs des Anspruchs 1.

### Stand der Technik

Die internationale Patentanmeldung WO 2013/023 953 A1 offenbart einen elektrohydraulischen Fremdkraft-Druckerzeuger für eine hydraulische Fahrzeugbremsanlage mit einem Elektromotor, einer Kolben-Zylinder-Einheit und einem Gewindetrieb, der eine drehende Antriebsbewegung des Elektromotors in eine lineare Abtriebsbewegung zum Verschieben eines Kolbens in einem Zylinder der Kolben-Zylinder-Einheit wandelt. Der Elektromotor, der Gewindetrieb und die Kolben-Zylinder-Einheit sind gleichachsig angeordnet, der Gewindetrieb befindet sich zwischen dem Elektromotor und der Kolben-Zylinder-Einheit und die Kolben-Zylinder-Einheit ist in axialer Verlängerung des Elektromotors angeordnet.

Die internationale Patentanmeldung WO 2014/001 138 A2 offenbart eine Innenzahnradpumpe als Rückförderpumpe einer Schlupfregelung einer hydraulischen Fahrzeugbremsanlage. Eine Antriebswelle der Innenzahnradpumpe ist mit einem Wellendichtring abgedichtet.

### Offenbarung der Erfindung

Der erfindungsgemäße, elektrohydraulische Fremdkraft-Druckerzeuger mit den Merkmalen des Anspruchs 1 weist einen Elektromotor, eine Kolben-Zylinder-Einheit und einen Gewindetrieb auf, der eine drehende Antriebsbewegung des Elektromotors in eine lineare Abtriebsbewegung umsetzt und der vom Elektromotor angetrieben wird und einen Kolben in einem Zylinder der Kolben-Zylinder-Einheit verschiebt. Zur Abdichtung des Elektromotors gegen Bremsflüssigkeit aus der Kolben-Zylinder-Einheit oder aus beispielsweise einem Hydraulikblock einer hydraulischen Fahrzeugbremsanlage, an dem der Elektromotor befestigt ist, weist der erfindungsgemäße Druckerzeuger eine Wellendichtung auf einer Antriebswelle zwischen dem Elektromotor und dem Gewindetrieb auf. Die Antriebswelle überträgt eine drehende Antriebsbewegung des Elektromotors auf den Gewindetrieb.

Die Antriebswelle ist eine Zwischenwelle, die eine drehende Antriebsbewegung des Elektromotors auf den Gewindetrieb überträgt. Die Zwischen- bzw. Antriebswelle ist mit einer Kupplung drehfest mit der Motorwelle des Elektromotors verbunden. Die Kupplung ist insbesondere drehstarr oder drehelastisch und vorzugsweise axial-, radial- und/oder winkelbeweglich zu einem Ausgleich von Axial-, Radial- und/oder Winkelfehlern und/oder Bewegungen zwischen der Motorwelle und dem Gewindetrieb bei einem Betrieb des Druckerzeugers. Beispiele solcher Kupplungen sind Zahn-, Klauen-, Schlitz- oder Kreuzschlitzkupplungen.

Die Unteransprüche haben vorteilhafte Ausgestaltungen und Weiterbildungen der im Anspruch 1 angegebenen Erfindung zum Gegenstand.

Anspruch 3 sieht ein Planetengetriebe als Untersetzungsgetriebe zwischen dem Elektromotor und dem Gewindetrieb vor, das vom Elektromotor angetrieben wird und den Gewindetrieb antreibt.

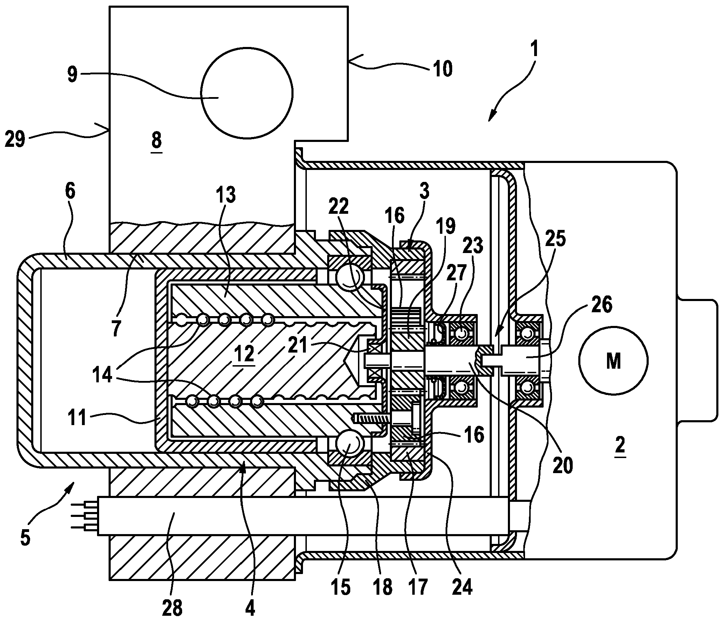

### Kurze Beschreibung der Zeichnung

Die Erfindung wird nachfolgend anhand einer in der Zeichnung dargestellten Ausführungsform näher erläutert. Die einzige Figur zeigt einen Achsschnitt eines erfindungsgemäßen, elektrohydraulischen Fremdkraft-Druckerzeugers in einer vereinfachten Darstellung.

### Ausführungsform der Erfindung

Der in der Zeichnung dargestellte, erfindungsgemäße elektrohydraulische Fremdkraft-Druckerzeuger 1 ist zur Erzeugung eines Bremsdrucks in einer hydraulischen Fremdkraft-Fahrzeugbremsanlage vorgesehen. Er weist einen Elektromotor 2, ein Planetengetriebe 3, einen Gewindetrieb 4 und eine Kolben-Zylinder-Einheit 5 auf, die in der angegebenen Reihenfolge axial hintereinander und teilweise ineinander angeordnet sind. Ein Zylinder 6 der Kolben-Zylinder-Einheit 5 ist in einem Fremdkraftzylinderbohrung 7 in einem Hydraulikblock 8 einer Bremsregelung der Fahrzeugbremsanlage angeordnet.

Der Hydraulikblock 8 dient einer Bremsdruckerzeugung und einer Bremsdruckregelung der Fahrzeugbremsanlage, wozu er außer dem erfindungsgemäßen Fremdkraft-Druckerzeuger 1 zur Bremsdruckerzeugung nicht gezeichnete Magnetventile, Rückschlagventile, Drucksensoren, Hydrospeicher und Dämpferkammern aufweist. Des Weiteren weist der Hydraulikblock 8 eine Hauptbremszylinderbohrung 9 zur Aufnahme eines Hauptbremszylinders auf. Durch eine nicht gezeichnete Verbohrung des Hydraulikblocks 8 sind die genannten hydraulischen Bauelemente entsprechend einem hydraulischen Schaltplan der Bremsregelung hydraulisch miteinander verschaltet. Die Bremsregelung dient einer Regelung eines Bremsdrucks bei einer Betriebsbremsung und ermöglicht Schlupfregelungen wie Blockierschutzregelungen, Antriebsschlupfregelung und/oder Fahrdynamikregelung/elektronisches Stabilitätsprogramm, für die die Abkürzungen ABS, ASR, FDR und ESP üblich sind. Solche Bremsregelungen und Schlupfregelungen sowie Hydraulikblöcke sind an sich bekannt und werden hier nicht weiter erläutert.

Die Fremdkraftzylinderbohrung 7 geht durch den Hydraulikblock 8 durch und der Zylinder 6 der Kolben-Zylinder-Einheit 5 des erfindungsgemäßen Fremdkraft-Druckerzeugers 1 steht auf einer dem Elektromotor 2 gegenüberliegenden Seite aus dem Hydraulikblock 8 vor. Der Elektromotor 2 ist außen am Hydraulikblock 8 an einer Motorseite 10 befestigt.

Ein Kolben 11 der Kolben-Zylinder-Einheit 5 ist als Hohlkolben ausgeführt, in dem der Gewindetrieb 4 aufgenommen ist. In der dargestellten und beschriebenen Ausführungsform der Erfindung ist der Gewindetrieb 4 ein Kugelgewindetrieb mit einer drehfesten Spindel 12, die starr mit dem Kolben 11 verbunden ist, eine drehbaren, rohrförmigen Mutter 13, die die Spindel 12 koaxial in dem Kolben 11 umschließt, und mit Kugeln 14 als Wälzkörpern zwischen der Mutter 13 und der Spindel 12. Ein Drehantrieb der Mutter 13 verschiebt die Spindel 12 und mit ihr den Kolben 11 im Zylinder 6 der Kolben-Zylinder-Einheit 5. Die Mutter 13 des Gewindetriebs 4 ist mit einem Kugellager 15, das an einem dem Elektromotor 2 zugewandten, offenen Ende des Zylinders 6 angeordnet ist, drehbar gelagert. Es sind andere Gewindetriebe als ein Kugelgewindetrieb möglich, die Erfindung ist nicht auf Kugelgewindetriebe als Gewindetrieb 4 beschränkt.

Die Mutter 13 des Gewindetriebs 4 bildet einen Planetenträger des Planetengetriebes 3: an einem dem Elektromotor 2 zugewandten Stirnende der Mutter 13 sind Planetenräder 16 des Planetengetriebes 3 drehbar gelagert. Ein Hohlrad 17 des Planetengetriebes 3 ist mit einem ringförmigen Halter 18 starr an dem offenen, dem Elektromotor 2 zugewandten Ende des Zylinders 6 befestigt.

Ein Sonnenrad 19 des Planetengetriebes 3 ist drehfest auf einer Antriebswelle 20 angeordnet, die beiderseits des Planetengetriebes 3 drehbar gelagert ist: auf der Seite des Gewindetriebs 4 ist die Antriebswelle 20 drehbar in einer Lagerbuchse gelagert, die allgemein als Drehlager 21 aufgefasst werden kann und die mit einem Lagerschild 22 an einem dem Planetengetriebe 3 und zugleich dem Elektromotor 2 zugewandten Stirnende der Mutter 13 des Gewindetriebs 4 befestigt ist. Auf der anderen Seite des Planetengetriebes 3, also auf der dem Elektromotor 2 zugewandten Seite, ist die Antriebswelle 20 mit einem Kugellager 23 drehbar gelagert, das in einem Lagerschild 24 angeordnet ist, der am Halter 18 des Hohlrads 17 und damit am Zylinder 6 der Kolben-Zylinder-Einheit 5 befestigt ist. Über die Drehlagerung der Mutter 13 des Gewindetriebs 4 mit dem Kugellager 15 am Zylinder 6 und ihr Kugellager 23 ist die Antriebswelle 20 drehbar am Gewindetrieb 4 gelagert.

Die Antriebswelle 20 ist eine Zwischenwelle, die mit einer Schlitzkupplung 25 drehstarr mit einer Motorwelle 26 des Elektromotors 2 verbunden ist. Die Schlitzkupplung 25 gleicht Axial-, Radial- und Winkelversatz zwischen der Motorwelle 26 und der Antriebswelle 20 aus. Es sind andere, beispielsweise auch drehelastische, Form- oder Kraftschlusskupplungen zur Übertragung einer Drehbewegung von der Motorwelle 26 des Elektromotors 20 auf die Antriebswelle 20 mit dem auf ihr drehfesten Sonnenrad 19 des Planetengetriebes 3 möglich.

Zwischen dem Elektromotor 2 und dem Planetengetriebe 3 ist ein Radial-Wellendichtring als Wellendichtung 27 auf der Antriebswelle 20 angeordnet. In der dargestellten Ausführungsform der Erfindung befindet sich die Wellendichtung 27 zwischen dem Kugellager 23, das die Antriebswelle 20 drehbar lagert, und dem Sonnenrad 19 bzw. dem Planetengetriebe 3. Die Wellendichtung 27 ist in dem Lagerschild 24 des Kugellagers 23 angeordnet. Die Wellendichtung 27 verhindert, dass Bremsflüssigkeit aus dem Zylinder 6 der Kolben-Zylinder-Einheit 5 oder aus dem Hydraulikblock 8 in den Elektromotor 2 gelangt.

Zu seinem elektrischen Anschluss und zu einer elektronischen Kommutierung weist der Elektromotor 2 eine rohrförmige Kabeldurchführung 28 auf, die achsparallel auf der Seite der Kolben-Zylinder-Einheit 5 aus dem Elektromotor 2 vorsteht. Die Kabeldurchführung 28 geht durch ein Durchgangsloch im Hydraulikblock 8 zu einer gegenüberliegenden Steuergeräteseite 29 durch. Auf der Steuergeräteseite 29 des Hydraulikblocks 8 wird ein nicht gezeichnetes, elektronisches Steuergerät der Bremsregelung befestigt, das die nicht gezeichnete Magnetventile und den Elektromotor 2 steuert und Signale von den Drucksensoren, einem Dreh- oder Drehwinkelsensor des Elektromotors 2 und Raddrehsensoren von Fahrzeugrädern erhält. Ein Anschluss des Elektromotors 2 an das elektronische Steuergerät erfolgt durch die Kabeldurchführung 28. In der Kabeldurchführung 28 befinden sich Anschluss- und Kommutierungskabel des Elektromotors 2. Die Wellendichtung 27 verhindert, dass Bremsflüssigkeit aus dem Zylinder 6 der Kolben-Zylinder-Einheit 5 oder aus dem Hydraulikblock 8 durch ein Motorgehäuse des Elektromotors 2 in die Kabeldurchführung 28 und von dort zum elektronischen Steuergerät gelangt.

## Patentansprüche

1. Elektrohydraulischer Fremdkraft-Druckerzeuger (1) für eine hydraulische Fahrzeugbremsanlage, mit einer Kolben-Zylinder-Einheit (5), mit einem Elektromotor (2) und mit einem Gewindetrieb (4), der eine drehende Antriebsbewegung des Elektromotors (2) in eine lineare Abtriebsbewegung zum Verschieben eines Kolbens (11) in einem Zylinder (6) der Kolben-Zylinder-Einheit (5) wandelt, **dadurch gekennzeichnet, dass** der Druckerzeuger (1) eine Wellendichtung (27) auf einer Antriebswelle (20) zwischen dem Elektromotor (2) und dem Gewindetrieb (4) aufweist und dass die Antriebswelle (20) eine Zwischenwelle ist, die über eine Kupplung (25) drehfest mit einer Motorwelle (26) des Elektromotors (2) verbunden ist.

2. Elektrohydraulischer Fremdkraft-Druckerzeuger nach Anspruch 1, **dadurch gekennzeichnet, dass** die Antriebswelle (20) mit einem Drehlager (21) drehbar am Gewindetrieb (4) gelagert ist.

3. Elektrohydraulischer Fremdkraft-Druckerzeuger nach Anspruch 1, **dadurch gekennzeichnet, dass** zwischen dem Elektromotor (2) und dem Gewindetrieb (4) ein Planetengetriebe (3) angeordnet ist, das von dem Elektromotor (2) angetrieben wird und das den Gewindetrieb (4) antreibt, und dass ein Sonnenrad (19) des Planetengetriebes (3) drehfest mit der Antriebswelle (20) ist.

4. Elektrohydraulischer Fremdkraft-Druckerzeuger nach Anspruch 3, **dadurch gekennzeichnet, dass** die Antriebswelle (20) beiderseits des Planetengetriebes (3) drehbar an dem Gewindetrieb (4) gelagert ist.

5. Elektrohydraulischer Fremdkraft-Druckerzeuger nach Anspruch 1, **dadurch gekennzeichnet, dass** der Elektromotor (2) eine rohrförmige Kabeldurchführung (28) parallel zu der Kolben-Zylinder-Einheit (5) aufweist, die sich über mindestens einen Teil einer Länge des Zylinders (6) der Kolben-Zylinder-Einheit (5) erstreckt.

## Claims

1. Electrohydraulic external-force pressure generator (1) for a hydraulic vehicle brake system, comprising a piston-cylinder unit (5), comprising an electric motor (2) and comprising a screw drive (4) which converts a rotating drive movement of the electric motor (2) into a linear output movement for displacing a piston (11) in a cylinder (6) of the piston-cylinder unit (5), **characterized in that** the pressure generator (1) has a shaft seal (27) on a drive shaft (20) between the electric motor (2) and the screw drive (4), and **in that** the drive shaft (20) is an intermediate shaft which is connected in a rotationally fixed manner to a motor shaft (26) of the electric motor (2) by means of a clutch (25).

2. Electrohydraulic external-force pressure generator according to Claim 1, **characterized in that** the drive shaft (20) is mounted in a rotatable manner on the screw drive (4) by way of a rotary bearing (21).

3. Electrohydraulic external-force pressure generator according to Claim 1, **characterized in that** a planetary gear mechanism (3) is arranged between the electric motor (2) and the screw drive (4), which planetary gear mechanism is driven by the electric motor (2) and drives the screw drive (4), and **in that** a sun gear (19) of the planetary gear mechanism (3) is rotationally fixed with the drive shaft (20).

4. Electrohydraulic external-force pressure generator according to Claim 3, **characterized in that** the drive shaft (20) is mounted in a rotatable manner on the screw drive (4) on either side of the planetary gear mechanism (3).

5. Electrohydraulic external-force pressure generator according to Claim 1, **characterized in that** the electric motor (2) has a tubular cable bushing (28) parallel to the piston-cylinder unit (5), which tubular cable bushing extends over at least a portion of a length of the cylinder (6) of the piston-cylinder unit (5).

## Revendications

1. Générateur de pression électrohydraulique à force extérieure (1) pour une installation de freinage hydraulique de véhicule, comprenant une unité cylindre-piston (5), un moteur électrique (2) et un entraînement à vis (4) qui convertit un mouvement d'entraînement de rotation du moteur électrique (2) en un mouvement de prise de force linéaire pour déplacer un piston (11) dans un cylindre (6) de l'unité cylindre-piston (5), **caractérisé en ce que** le générateur de pression (1) présente un joint d'étanchéité d'arbre (27) sur un arbre d'entraînement (20) entre le moteur électrique (2) et l'entraînement à vis (4) et **en ce que** l'arbre d'entraînement (20) est un arbre intermédiaire qui est connecté par le biais d'un embrayage (25) de manière solidaire en rotation à un arbre de moteur (26) du moteur électrique (2).

2. Générateur de pression électrohydraulique à force extérieure selon la revendication 1, **caractérisé en ce que** l'arbre d'entraînement (20) est supporté avec un palier rotatif (21) de manière rotative sur l'entraînement à vis (4).

3. Générateur de pression électrohydraulique à force extérieure selon la revendication 1, **caractérisé en ce qu'**entre le moteur électrique (2) et l'entraînement à vis (4) est disposé un engrenage planétaire (3) qui est entraîné par le moteur électrique (2) et qui entraîne l'entraînement à vis (4) et **en ce qu'**une roue solaire (19) de l'engrenage planétaire (3) est solidaire en rotation de l'arbre d'entraînement (20).

4. Générateur de pression électrohydraulique à force extérieure selon la revendication 3, **caractérisé en ce que** l'arbre d'entraînement (20) est supporté des deux côtés de l'engrenage planétaire (3) de manière rotative sur l'entraînement à vis (4).

5. Générateur de pression électrohydraulique à force extérieure selon la revendication 1, **caractérisé en ce que** le moteur électrique (2) présente un passage de câble tubulaire (28) parallèlement à l'unité cylindre-piston (5), qui s'étend sur au moins une partie d'une longueur du cylindre (6) de l'unité cylindre-piston (5).
